# EUROPEAN PATENT APPLICATION

(11) **EP 2 103 243 A1**
(43) Date of publication of application: **23.09.2009**
(21) Application number: 08250936.5
(22) Date of filing: 18.03.2008
(51) Int. Cl.: A47L 9/28

(54) **A low noise and energy saving air vacuum cleaner**

(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Wright, Howard Hugh Burnby

(57) **Abstract**

A low noise and energy saving air vacuum cleaner by detecting the operation status of the cleaner to control the size of the electricity inputted to an air pump drive motor, or exercise the control of power delivery or power cut off; normal rated voltage being inputted when the cleaner is in normal working status; or the power outputted to the air pump drive motor being reduced or cut off when the cleaning tool of the cleaner clears away from its work area to render the cleaner in full load operation status as were a blower to increase both noise level and power consumption, or when the cleaning tool is blocked due to excessive packing against the work area for reduced noise level and energy saving.

## Description

### BACKGROUND OF THE INVENTION

### (a) Field of the Invention

The present invention is related to an air vacuum cleaner, and more particularly to a low noise and energy saving air vacuum cleaner that is capable of adjusting and controlling electric energy depending on the load, having disposed an electric controlled unit between input source and air pump drive motor of the cleaner to input normal rated voltage when the cleaner is in normal working status; and to either reduce the power outputted to the air pump drive motor or cut off the power source to reduce noise level and save energy when the cleaning tool clears away from the its work area during off-load status, or when the cleaning tool is blocked due to excessive packing against the work area.

### (b) Description of the Prior Art

The conventional air vacuum cleaner usually idles when the cleaning tool of the cleaner stays away from its work area, that is, the cleaner turns into a full load operation status as it were a blower to result in increased load and the power of the electricity outputted to an air pump drive motor is also increased to produce higher noise level and waste electricity, and to fail in providing vacuuming function and waste of electric energy when the cleaning tool is blocked due to excessive packing against the work area.

### SUMMARY OF THE INVENTION

The primary purpose of the present invention is to provide a low noise and energy saving air vacuum cleaner by detecting the operation status of the cleaner to control the size of the electricity inputted to an air pump drive motor, or exercise the control of power delivery or power cut off. Accordingly, normal rated voltage is inputted when the cleaner is in normal working status; or the power outputted to the air pump drive motor is reduced or cut off when the cleaning tool of the cleaner clears away from its work area to render the cleaner in full load operation status as were a blower to increase both noise level and power consumption, or the cleaning tool is blocked due to excessive packing against the work area for achieving low noise level and energy saving purposes.

The present invention provides a vacuum cleaner comprising drive motor for supplying sub-atmospheric air pressure to a cleaning tool, a control unit for reducing or cutting-off electric power supplied to the drive motor when the cleaning tool is in an off-load status or is blocked, and a detector for detecting when the cleaning tool is in an off-load status or is blocked.

### BRIEF DESCRIPTION OF THE DRAWINGS

Fig. 1 is a circuit block chart of another preferred embodiment yet of the present invention, wherein a feedback detector is provided to control the air pump driving motor.
Fig. 2 is a circuit block chart of the present invention showing that a feedback detector is provided to control an electric controlled unit.
Fig. 3 is a circuit block chart showing another preferred embodiment yet of the present invention, wherein detection signals from a motor rpm detector are operated to switch the variable windings of the air pump drive motor of the air vacuum cleaner.
Fig. 4 is another circuit block chart yet showing that a feedback detector is provided to control the electric controlled unit.
Fig. 5 is a circuit block chart showing another preferred embodiment yet of the present invention, wherein detection signals from a fluid pressure detector of air inlet or air outlet are operated to switch an air pump drive ring header type motor variable windings of the air vacuum cleaner.
Fig. 6 is further circuit block chart yet showing that a feedback detector is provided to control the electric controlled unit.
Fig. 7 is a circuit block chart showing another preferred embodiment yet of the present invention, wherein detection signals from a fluid speed detector of air inlet or air outlet are operated to switch an air pump drive ring header type motor variable windings of the air vacuum cleaner.
Fig. 8 is a circuit block chart of the present invention showing that a work status detection switch is provided to control the operation of the air pump drive motor of the air vacuum cleaner.
Fig. 9 is a circuit block chart of another preferred embodiment yet of the present invention, wherein a trigger-off dynamo-electric switch is provided to switch the air pump drive ring header type more variable windings of the air vacuum cleaner.
Fig. 10 is another circuit block chart of the present invention showing that a work status detection switch is provided to control the operation of the air pump drive motor of the air vacuum cleaner.
Fig. 11 is a circuit block chart of another preferred embodiment yet of the present invention, wherein a non-slide approximate switch detection switch is provided to switch the air pump drive ring header type more variable windings of the air vacuum cleaner.
Fig. 12 is a circuit block chart of a preferred embodiment of the present invention, wherein an impedance unit connected in series with a power source and an air pump drive motor is provided to control the air pump drive motor.
Fig. 13 is a circuit block chart showing that an amperage feedback detector is provided to control the electric controlled unit.

### DETAILED DESCRIPTION OF THE PREFERRED EMBODIMENTS

A low noise and energy saving air vacuum cleaner that is capable of adjusting and controlling electric energy of the present invention may rely upon AC city power, or DC power, or a source unit of rechargeable batter for its input source. The present invention while being provided with the power cord, rechargeable battery source unit, operation switch, and an air pump drive motor for supplying sub-atmospheric air pressure to a cleaning tool for vacuum cleaning, dust collection bag and other mechanism, casing and associate units and equipment related to the vacuuming operation is adapted with an electric controlled unit corresponding to the operation status of the air vacuum cleaner. The fashions of interacting control between the electric controlled unit and the source end include:
(1) Active electric controlled unit: an electric controlled unit is comprised of having an impedance unit is connected in series with a power source and an air pump drive motor for executing active control of the power transported to the air pump drive motor of the air vacuum cleaner; and
(2) Passive electric controlled unit: an electric controlled unit is disposed between the input source end and the air pump drive motor of the air vacuum cleaner to function as a passive electric controlled unit; and feedback detector is provided to control the electric controlled unit to execute passive control of the power transported to the air pump drive motor of the air vacuum cleaner. The air pump drive motor of the air vacuum cleaner is controlled by the electric controlled unit in the following fashions:
   - Controls the current transported to the air pump drive motor to maintain as a rated or limit current output; or
   - Controls the voltage transported to the air pump drive motor of the air vacuum cleaner; or
   - Controls the source to supply or cut off the power to the air pump drive motor of the air vacuum cleaner; or
   - Controls to switch the tapping of the magnetic filed winding of the series excitation ring header type of motor if the air pump drive motor of the air vacuum cleaner relates to a series excitation ring header type of motor so to change the rpm of the air pump drive motor of the air vacuum cleaner.

One or a plurality of the following functions may be selected for the low noise and energy saving air vacuum cleaner that is capable of adjusting and controlling electric energy:
(1) Adjust and control the inputted electric energy to be reduced or cut off when the cleaning tool of the vacuum leaner is in off load status or blocked due to excessive packing against the work area;
(2) Adjust and control the inputted electric energy to be reduced or cut off when the cleaning tool of the vacuum leaner is in off load status;
   and/or
(3) Adjust and control the inputted electric energy to be reduced or cut off when the cleaning tool of the vacuum leaner is blocked due to excessive packing against the work area.

The electric controlled unit may provide the setup time difference when adapted with a deferred response function to set the response time of the electric controlled unit for the duration of the receiving of feedback signal until the execution of the control of the power supplied to the air pump drive motor of the air vacuum cleaner. The deferred response function relates to an optional function may be provided or not.

A feedback detection unit may be further provided to the low noise and energy saving air vacuum cleaner that is capable of adjusting and controlling electric energy of the present invention to detect the operation status of the air vacuum cleaner, thus to control the electric controlled unit functioning as a passive control unit for further control of the operation of the air pump drive motor of the air vacuum cleaner.

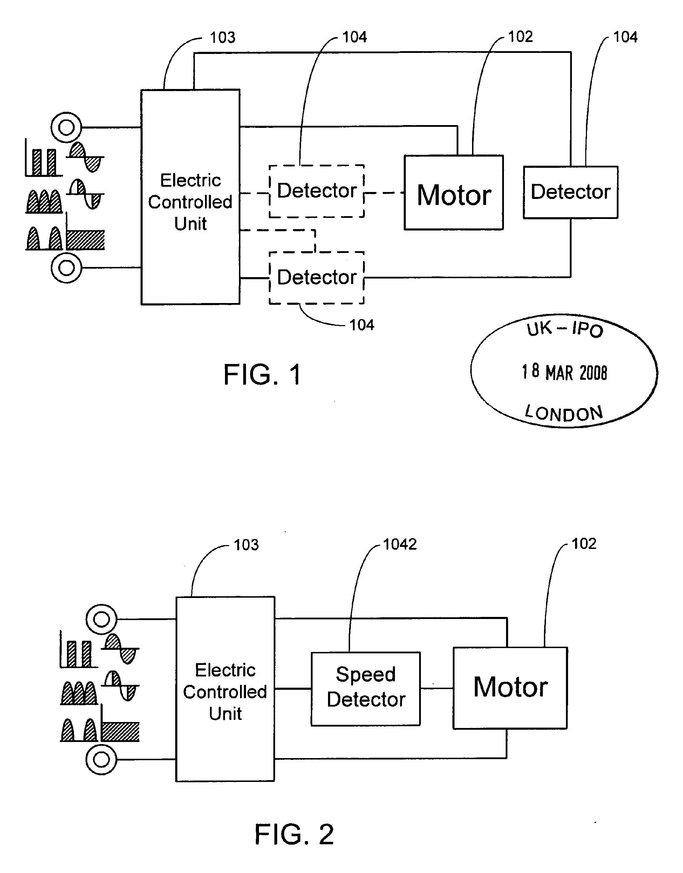

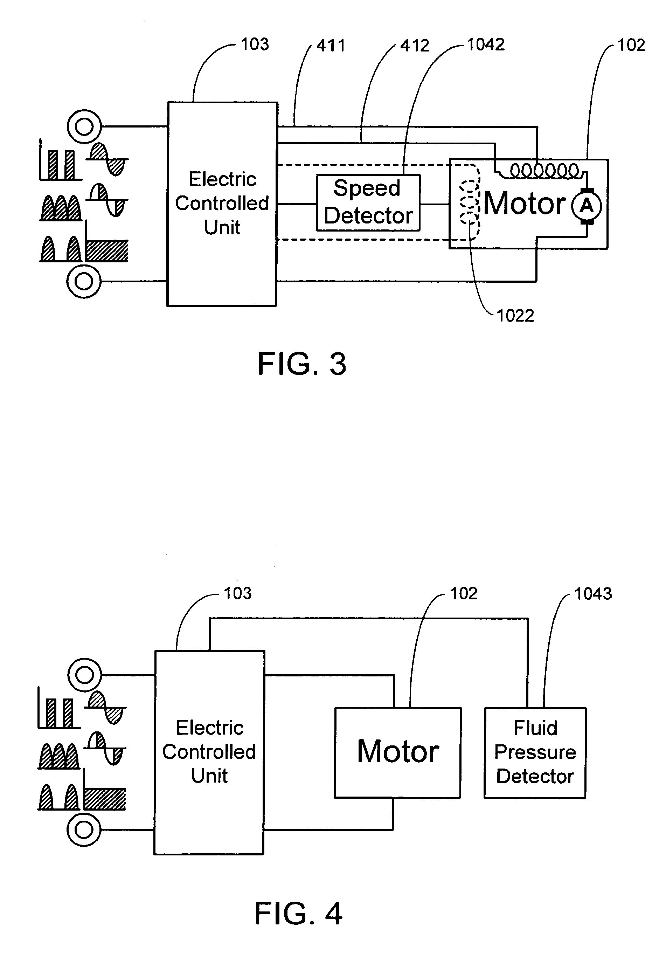

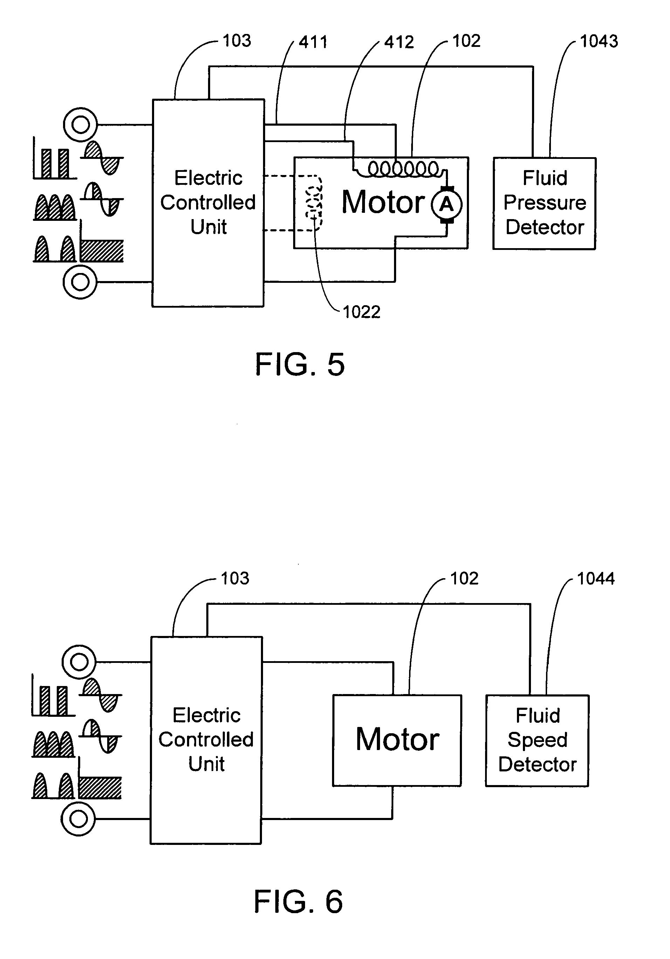

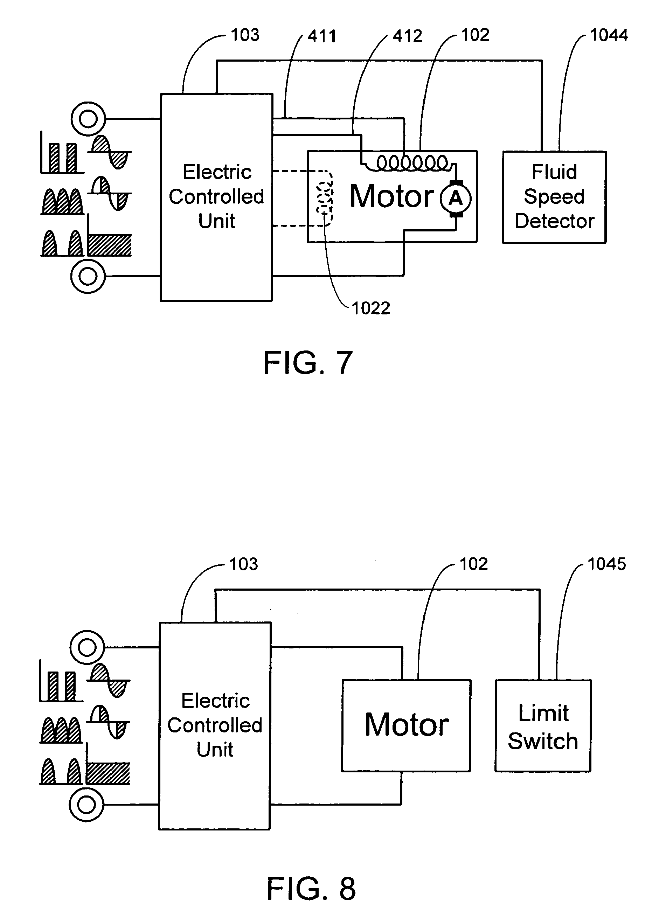

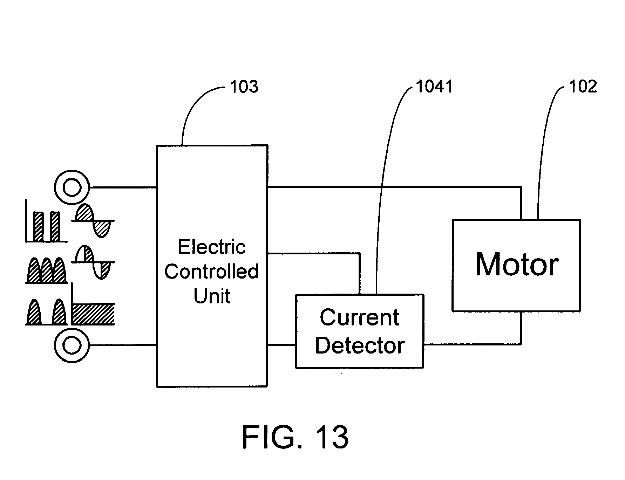

Fig. 1 is a circuit block chart of another preferred embodiment yet of the present invention, wherein a feedback detector is provided to control the air pump driving motor. The preferred embodiment illustrated in Fig. 1 is essentially comprised of:
- The air pump drive motor 102: a series excitation motor, shunt excitation motor, compound excitation motor, or ring header type of brush motors including shunt excitation motor with magnetic field of permanent magnet driven by AC or DC source; or brushless motor of permanent magnet, magnetic resistance motor, cage rotor induction motor, slip ring induction motor that is capable of synchronous or asynchronous operation may be selected to drive the air pump of the air vacuum cleaner; and
- An electric controlled unit 103: comprised of a electromechanical device or solid state electronic device of the prior art to be disposed at where between the source and the air pump drive motor 102 of the air vacuum cleaner for subject to the control by a feedback detection unit 104; accordingly, when the air vacuum cleaner is in its normal work status, the normal rated voltage is inputted; and during the off-load status when the cleaning tool of the air vacuum cleaner clears away from its work area, or the cleaning tool is blocked due to excessive packing against the work area, the power supply to the air pump drive motor 102 is either reduced or cut off for noise reduction and power saving purposes; the input end of the electric controlled unit 103 may be related to AC or DC power from city power socket or a DC source from a rechargeable type of source unit as required; and the output end of the electric controlled unit 103 may be related to AC or DC power to control its output voltage and amperage subject to the specification of the air pump drive motor 102 adapted, and further to control its voltage, amperage and frequency if an AC or DC brushless motor is elected for the air pump driver motor 102 of the air vacuum; and
- A feedback detection unit 104: comprised of a motor load amperage detector 1041 (as illustrated in Fig. 13), or a motor speed detector 1042 (as illustrated in Figs. 2 and 3), or a fluid pressure detector 1043 (as illustrated in Figs. 4 and 5), or a fluid speed detector 1044 (as illustrated in Figs. 6 and 7) to produce detection signals related to the operation status of the air vacuum cleaner, the detection signal may be related to ON-OFF switch signal, analog signal, digital signal or encoding signal to be transmitted to the electric controlled unit 103 where the signal is compared with the settings of the electric controlled unit 103; when the air vacuum is in its normal work status, or the cleaning tool is blocked due to excessive packing against the work area, a normal rated voltage is inputted into the air pump drive motor 102 of the air vacuum cleaner; and when the air vacuum cleaner is in off-load status as the cleaning tool clears away from its work area so to reduce the power supplied to the air pump drive motor 102 of the air vacuum cleaner, thus to reduce the speed of the air pump drive motor 102 of the air vacuum cleaner for achieving reduced noise level and power-saving purposes.

The electric controlled unit 103 may provide the setup time difference when adapted with a deferred response function to set the response time of the electric controlled unit 103 for the duration of the receiving of feedback signal until the execution of the control of the power supplied to the air pump drive motor 102 of the air vacuum cleaner. The deferred response function relates to an optional function may be provided or not.

The control by the feedback detection unit 104 for the air pump drive motor 102 of the air vacuum cleaner is described below.

Fig. 2 is circuit block chart of the present invention showing that a feedback detector is provided to control an electric controlled unit. The preferred embodiment of the present invention illustrated in Fig. 2, the feedback detection unit 104 is comprised of the motor speed detector 1042 and motor speed feedback signals are produced for the control of the power transported from the electric controlled unit 103 to the air pump drive motor 102 of the air vacuum cleaner. When the air vacuum is in its normal work status, a normal rated voltage is inputted; and when the air vacuum cleaner is in off-load status as the cleaning tool clears away from its work area or the cleaning tool is blocked due to excessive packing against the work area so to reduce or cut off the power supplied to the air pump drive motor 102 of the air vacuum cleaner, thus to reduce the noise level and save power.

Fig. 3 is a circuit block chart showing another preferred embodiment yet of the present invention, wherein detection signals from a motor rpm detector are operated to switch the variable windings of the air pump drive motor of the air vacuum cleaner. wherein the air pump drive motor 102 may be comprised of a series excitation or compound excitation ring header type of motor. If the air pump drive motor 102 of the air vacuum cleaner relates to a series excitation ring header type of motor, and the air pump drive series excitation ring header type of motor 1021 of the air vacuum cleaner is adapted with the feedback detection unit 104 comprised of the motor speed detector 1042; then as illustrated in Fig. 3, the operation control methods include: (1) the motor speed detector 1042 functioning as a switch to directly switch the control of the tapping of the series excitation magnetic filed winding from the air pump drive series excitation ring header type of motor of the air vacuum cleaner or (2) by having the motor speed detector 1042 to produce detection signals to control the operation of the electric controlled unit 103 before switching the control of the tapping of the series excitation magnetic filed winding from the air pump drive series excitation ring header type of motor of the air vacuum cleaner; so that when the air vacuum cleaner is at its normal work status, the power is supplied to a higher speed tapping 411 of the winding of magnetic field of the air pump drive series excitation ring header type of motor of the air vacuum cleaner; and when the air vacuum cleaner is in its off-load status with its cleaning tool clears away from the work area, or the cleaning tool is blocked due to excessive packing against the work area, the power is supplied to a lower speed tapping 412 of the winding of magnetic field of the air pump drive series excitation ring header type of motor of the air vacuum cleaner so to reduce the power transported to the air pump series excitation ring head type of motor 1021 or the power transported thereto is cut off. If the air pump drive motor 102 is related to a compound ring header type of motor adapted with a parallel excitation winding 1022, the motor speed detector 1042 functions as a switch, or having the motor speed detector 1042 to produce detection signals to control the operation of the electric controlled unit 103 to further adjust and control the excitation intensity of the series excitation magnetic field or the parallel excitation magnetic field winding so to reduce electric energy transmitted or cut off the power supplied to the air pump drive motor 102 of the air vacuum cleaner.

The electric controlled unit 103 may provide the setup time difference when adapted with a deferred response function to set the response time of the electric controlled unit 103 for the duration of the receiving of feedback signal until the execution of the control of the power supplied to the air pump drive motor 102 of the air vacuum cleaner. The deferred response function relates to an optional function may be provided or not.

Fig. 4 is another circuit block chart yet showing that a feedback detector is provided to control the electric controlled unit. In the preferred embodiment of the present invention illustrated in Fig. 4, the feedback detection unit 104 is comprised of a fluid pressure detector 1043 disposed at the inlet or outlet of the fluid to produce feedback signals for the control of power transported to the air pump drive motor 102 of the air vacuum cleaner from the electric controlled unit 103. When the air vacuum cleaner is at its normal work status, normal rated voltage is inputted; and when the air vacuum cleaner is in its off-load status with the cleaning tool clears away from the work area, or the cleaning tool is blocked due to excessive packing against the work area, the power supplied to the air pump driver motor 102 of the air vacuum cleaner is reduced or cut off for achieving the purposes of reduced noise level and energy saving.

Fig. 5 is a circuit block chart showing another preferred embodiment yet of the present invention, wherein detection signals from a fluid pressure detector of air inlet or air outlet are operated to switch an air pump drive ring header type motor variable windings of the air vacuum cleaner. Wherein the air pump drive motor 102 may be comprised of a series excitation or compound excitation ring header type of motor. If the air pump drive motor 102 of the air vacuum cleaner relates to a series excitation ring header type of motor and is adapted with the feedback detection unit 104 comprised of the fluid pressure detector 1043 at the inlet or outlet of the fluid; then as illustrated in Fig. 5, the operation control methods include: (1) the fluid pressure detector 1043 functioning as a switch to directly switch the control of the tapping of the series excitation magnetic filed winding from the air pump drive series excitation ring header type of motor of the air vacuum cleaner or (2) by having the fluid pressure detector 1043 to produce detection signals to control the operation of the electric controlled unit 103 before switching the control of the tapping of the series excitation magnetic filed winding from the air pump drive series excitation ring header type of motor of the air vacuum cleaner; so that when the air vacuum cleaner is at its normal work status, the power is supplied to a higher speed tapping 411 of the winding of magnetic field of the air pump drive series excitation ring header type of motor of the air vacuum cleaner; and when the air vacuum cleaner is in its off-load status with its cleaning tool clears away from the work area, or the cleaning tool is blocked due to excessive packing against the work area, the power is supplied to a lower speed tapping 412 of the winding of magnetic field of the air pump drive series excitation ring header type of motor of the air vacuum cleaner so to reduce the power transported to the air pump series excitation ring head type of motor 1021 or the power transported thereto is cut off. If the air pump drive motor 102 is related to a compound ring header type of motor adapted with a parallel excitation winding 1022, the fluid pressure detector 1043 functions as a switch, or having the fluid pressure detector 1043 to produce detection signals to control the operation of the electric controlled unit 103 to further adjust and control the excitation intensity of the series excitation magnetic field or the parallel excitation magnetic field winding so to reduce electric energy transmitted or cut off the power supplied to the air pump drive motor 102 of the air vacuum cleaner.

The electric controlled unit 103 may provide the setup time difference when adapted with a deferred response function to set the response time of the electric controlled unit 103 for the duration of the receiving of feedback signal until the execution of the control of the power supplied to the air pump drive motor 102 of the air vacuum cleaner. The deferred response function relates to an optional function may be provided or not.

Fig. 6 is another circuit block chart yet showing that a feedback detector is provided to control the electric controlled unit. In the preferred embodiment of the present invention as illustrated in Fig. 6, the feedback detection unit 104 is comprised of the fluid speed detector 1044 to produce feedback signals for the control of the power transported to the air pump drive motor 102 of the air vacuum cleaner from the electric controlled unit 103. When the air vacuum is in its normal work status, a normal rated voltage is inputted; and when the air vacuum cleaner is in off-load status as the cleaning tool clears away from its work area and the cleaning tool is blocked due to excessive packing against the work area so to reduce or cut off the power supplied to the air pump drive motor 102 of the air vacuum cleaner, thus to reduce the noise level and save power.

Fig. 7 is a circuit block chart showing another preferred embodiment yet of the present invention, wherein detection signals from a fluid speed detector of air inlet or air outlet are operated to switch an air pump drive series excitation ring header type motor variable windings of the air vacuum cleaner. If the air pump drive motor 102 of the air vacuum cleaner relates to a series excitation ring header type of motor and is adapted with the feedback detection unit 104 comprised of the fluid pressure detector 1043 at the inlet or outlet of the fluid; then as illustrated in Fig. 7, the operation control methods include: (1) the fluid speed detector 1044 functioning as a switch to directly switch the control of the tapping of the series excitation magnetic filed winding from the air pump drive series excitation ring header type of motor of the air vacuum cleaner or (2) by having the fluid speed detector 1044 to produce detection signals to control the operation of the electric controlled unit 103 before switching the control of the tapping of the series excitation magnetic filed winding from the air pump drive series excitation ring header type of motor of the air vacuum cleaner; so that when the air vacuum cleaner is at its normal work status, the power is supplied to a higher speed tapping 411 of the winding of magnetic field of the air pump drive series excitation ring header type of motor of the air vacuum cleaner; and when the air vacuum cleaner is in its off-load status with its cleaning tool clears away from the work area, or the cleaning tool is blocked due to excessive packing against the work area, the power is supplied to a lower speed tapping 412 of the winding of magnetic field of the air pump drive series excitation ring header type of motor of the air vacuum cleaner so to reduce the power transported to the air pump series excitation ring head type of motor 1021 or the power transported thereto is cut off. If the air pump drive motor 102 is related to a compound ring header type of motor adapted with a parallel excitation winding 1022, the fluid speed detector 1044 functions as a switch, or having the fluid speed detector 1044 to produce detection signals to control the operation of the electric controlled unit 103 to further adjust and control the excitation intensity of the series excitation magnetic field or the parallel excitation magnetic field winding so to reduce electric energy transmitted or cut off the power supplied to the air pump drive motor 102 of the air vacuum cleaner.

The electric controlled unit 103 may provide the setup time difference when adapted with a deferred response function to set the response time of the electric controlled unit 103 for the duration of the receiving of feedback signal until the execution of the control of the power supplied to the air pump drive motor 102 of the air vacuum cleaner. The deferred response function relates to an optional function may be provided or not.

A work status detection switch, e.g., a slide dynamo-electric switch 1045 or a non-slide approximate switch 1046 is further disposed at where between the fluid suction inlet of the air vacuum cleaner and its work area, the low noise and energy saving air vacuum cleaner of the present invention to control the voltage transported to the air pump driver motor 102 from the electric controlled unit 103. When the air vacuum cleaner is in its normal work status, the normal rated voltage is inputted to drive the air pump drive motor 102 of the air vacuum cleaner; and when the air vacuum cleaner is in its off-load status with the cleaning tool clears away from the work area, the power transported to the air pump drive motor 102 of the air vacuum cleaner is reduced or cut off for reducing noise level and for energy-saving purposes; or the direct switch is executed by the work status detection switch to lower the speed of the air pump drive motor 102 of the air vacuum cleaner, or to cut off the power transported to the air pump drive motor 102 of the air vacuum cleaner; or the switch is executed by the electric controlled unit 103 to lower the speed of the air pump drive motor 102 of the air vacuum cleaner, or to cut off the power transported to the air pump drive motor 102 of the air vacuum cleaner.

The electric controlled unit 103 may provide the setup time difference when adapted with a deferred response function to set the response time of the electric controlled unit 103 for the duration of the receiving of feedback signal until the execution of the control of the power supplied to the air pump drive motor 102 of the air vacuum cleaner. The deferred response function relates to an optional function may be provided or not.

The fashion of the control of the operation of the air pump drive motor of the air vacuum cleaner by the work status detection switch includes:
Fig. 8 is a circuit block chart of the present invention showing that a work status detection switch is provided to control the operation of the air pump drive motor of the air vacuum cleaner. The preferred embodiment of the present invention illustrated in Fig. 8 has a slide dynamo-electric switch 1045 at where between the fluid suction inlet of the air vacuum cleaner and its work area. When the air vacuum is in its normal work status, a normal rated voltage is inputted; and when the air vacuum cleaner is in off-load status as the cleaning tool clears away from its work area and the cleaning tool is blocked due to excessive packing against the work area so to reduce or cut off the power supplied to the air pump drive motor 102 of the air vacuum cleaner, thus to reduce the noise level and save power.

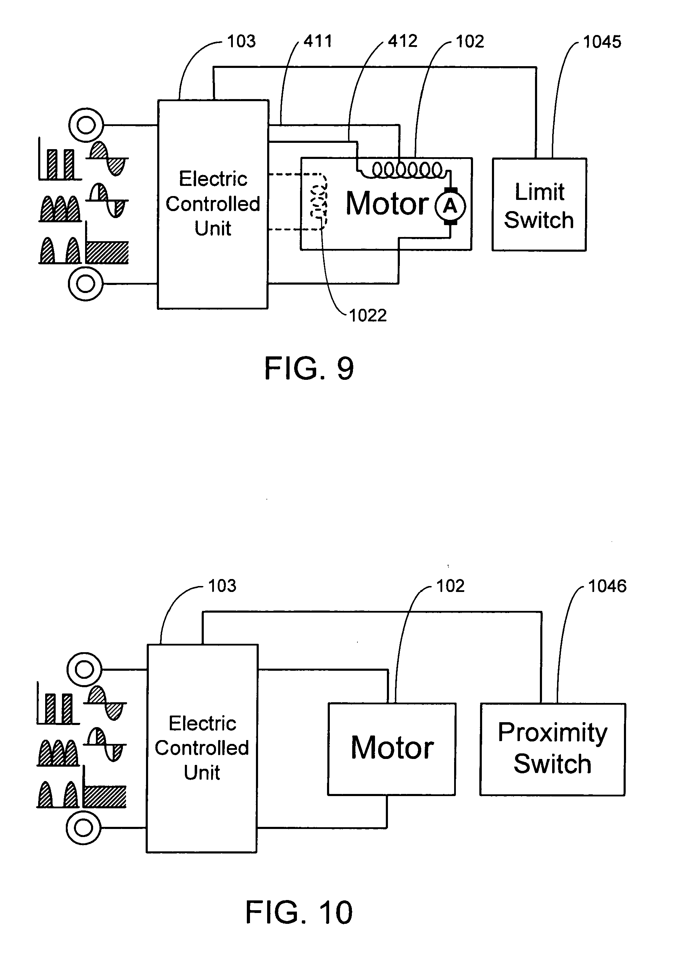

Fig. 9 is a circuit block chart of another preferred embodiment yet of the present invention, wherein a slide dynamo-electric switch is provided to switch the air pump drive series excitation ring header type more variable windings of the air vacuum cleaner. I If the air pump drive motor 102 of the air vacuum cleaner relates to a series excitation ring header type of motor and is adapted with the feedback detection unit 104 comprised of the slide dynamo-electric switch 1045 at the inlet or outlet of the fluid; then as illustrated in Fig. 9, the operation control methods include: (1) the slide dynamo-electric switch 1045 functioning as a switch to directly switch the control of the tapping of the series excitation magnetic filed winding from the air pump drive series excitation ring header type of motor of the air vacuum cleaner or (2) by having the slide dynamo-electric switch 1045 to produce detection signals to control the operation of the electric controlled unit 103 before switching the control of the tapping of the series excitation magnetic filed winding from the air pump drive series excitation ring header type of motor of the air vacuum cleaner; so that when the air vacuum cleaner is at its normal work status, the power is supplied to a higher speed tapping 411 of the winding of magnetic field of the air pump drive series excitation ring header type of motor of the air vacuum cleaner; and when the air vacuum cleaner is in its off-load status with its cleaning tool clears away from the work area, or the cleaning tool is blocked due to excessive packing against the work area, the power is supplied to a lower speed tapping 412 of the winding of magnetic field of the air pump drive series excitation ring header type of motor of the air vacuum cleaner so to reduce the power transported to the air pump series excitation ring head type of motor 1021 or the power transported thereto is cut off. If the air pump drive motor 102 is related to a compound ring header type of motor adapted with a parallel excitation winding 1022, the slide dynamo-electric switch 1045 functions as a switch, or having the slide dynamo-electric switch 1045 to produce detection signals to control the operation of the electric controlled unit 103 to further adjust and control the excitation intensity of the series excitation magnetic field or the parallel excitation magnetic field winding so to reduce electric energy transmitted or cut off the power supplied to the air pump drive motor 102 of the air vacuum cleaner.
The electric controlled unit 103 may provide the setup time difference when adapted with a deferred response function to set the response time of the electric controlled unit 103 for the duration of the receiving of feedback signal until the execution of the control of the power supplied to the air pump drive motor 102 of the air vacuum cleaner. The deferred response function relates to an optional function may be provided or not.
Fig. 10 is another circuit block chart of the present invention showing that a work status detection switch is provided to control the operation of the air pump drive motor of the air vacuum cleaner. The preferred embodiment of the present invention as illustrated in Fig. 10 has disposed an optical, static, or ultrasonic non-slide approximately switch 1046 at where between the fluid suction inlet of the air vacuum cleaner and its work area. When the air vacuum is in its normal work status, a normal rated voltage is inputted; and when the air vacuum cleaner is in off-load status as the cleaning tool clears away from its work area and the cleaning tool is blocked due to excessive packing against the work area so to reduce or cut off the power supplied to the air pump drive motor 102 of the air vacuum cleaner, thus to reduce the noise level and save power.

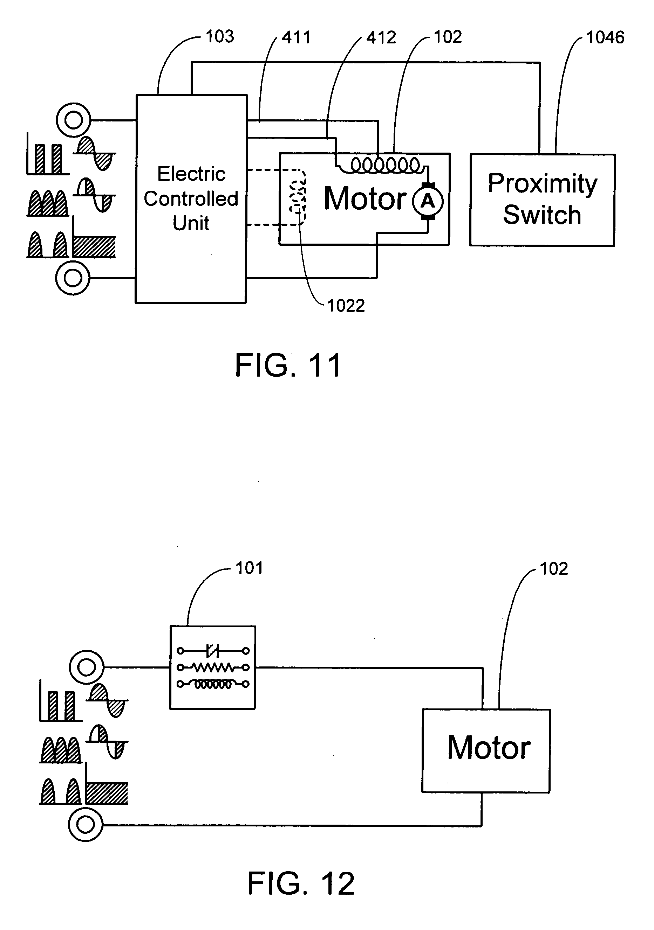

Fig. 11 is a circuit block chart of another preferred embodiment yet of the present invention, wherein a non-slide approximate switch is provided to switch the air pump drive series excitation ring header type more variable windings of the air vacuum cleaner. If the air pump drive motor 102 of the air vacuum cleaner relates to a series excitation ring header type of motor and is adapted with the feedback detection unit 104 comprised of the non-slide approximate switch 1046 at the inlet or outlet of the fluid; then as illustrated in Fig. 11, the operation control methods include: (1) the non-slide approximate switch 1046 functioning as a switch to directly switch the control of the tapping of the series excitation magnetic filed winding from the air pump drive series excitation ring header type of motor of the air vacuum cleaner or (2) by having the non-slide approximate switch 1046 to produce detection signals to control the operation of the electric controlled unit 103 before switching the control of the tapping of the series excitation magnetic filed winding from the air pump drive series excitation ring header type of motor of the air vacuum cleaner; so that when the air vacuum cleaner is at its normal work status, the power is supplied to a higher speed tapping 411 of the winding of magnetic field of the air pump drive series excitation ring header type of motor of the air vacuum cleaner; and when the air vacuum cleaner is in its off-load status with its cleaning tool clears away from the work area, or the cleaning tool is blocked due to excessive packing against the work area, the power is supplied to a lower speed tapping 412 of the winding of magnetic field of the air pump drive series excitation ring header type of motor of the air vacuum cleaner so to reduce the power transported to the air pump series excitation ring head type of motor 1021 or the power transported thereto is cut off. If the air pump drive motor 102 is related to a compound ring header type of motor adapted with a parallel excitation winding 1022, the non-slide approximate switch 1046 functions as a switch, or having the non-slide approximate switch 1046 to produce detection signals to control the operation of the electric controlled unit 103 to further adjust and control the excitation intensity of the series excitation magnetic field or the parallel excitation magnetic field winding so to reduce electric energy transmitted or cut off the power supplied to the air pump drive motor 102 of the air vacuum cleaner.
The electric controlled unit 103 may provide the setup time difference when adapted with a deferred response function to set the response time of the electric controlled unit 103 for the duration of the receiving of feedback signal until the execution of the control of the power supplied to the air pump drive motor 102 of the air vacuum cleaner. The deferred response function relates to an optional function may be provided or not.
Fig. 12 is a circuit block chart of a preferred embodiment of the present invention, wherein an impedance unit connected in series with a power source and an air pump drive motor is provided to control the air pump drive motor. The preferred embodiment illustrated in Fig. 12 is essentially comprised of:
   - An air pump drive motor 102 of the air vacuum cleaner:

   depending on the source available, an AC or DC series excitation motor, shunt excitation motor, compound excitation motor, or ring header type of brush motors including shunt excitation motor with magnetic field of permanent magnet; or brushless motor of permanent magnet, magnetic resistance motor, cage rotor induction motor, slip ring induction motor that is capable of synchronous or asynchronous operation to drive the air pump of the air vacuum cleaner; and
      - An impedance Unit 101: connected in series with the source and
   the air pump drive motor 102 of the air vacuum cleaner, essentially comprised of a capacitor impedance unit for executing active control; alternatively, the impedance unit 101 for active control unit may be comprised of a resistance device or a positive coefficient resistance device (PTC), or inductive device; or the impedance unit 101 is comprised of any one or multiple of the same or different devices described herein connected in series, parallel, or series-parallel; the input end of the impedance unit 101 may be related to AC or DC power from city power socket, or to a DC power supplied from a rechargeable battery type of source installation as required so to cause the both end voltage of the impedance unit 101 to relatively change with the load amperage to actively drop the end voltage of the air pump drive motor of the air vacuum motor for reducing the electric power while the cleaning tool of the air vacuum cleaner clears away from its work area to indicate off-load status or the cleaning tool is blocked due to excessive packing against the work area.

Fig. 13 is a circuit block chart showing that a load amperage feedback detector is provided to control the electric controlled unit. In the preferred embodiment of the present invention illustrated in Fig. 13, the feedback detection unit 104 is comprised of the motor load amperage feedback detector 1041 and the load amperage feedback signals are provided for the control of the power transported from the electric controlled unit 103 to the air pump drive motor 102 of the air vacuum cleaner. When the air vacuum is in its normal work status, a normal rated voltage is inputted; and when the air vacuum cleaner is in off-load status as the cleaning tool clears away from its work area or the cleaning tool is blocked due to excessive packing against the work area, the electric controlled unit 103 is operated to reduce or cut off the power supplied to the air pump drive motor 102 of the air vacuum cleaner, thus to reduce the noise level and save power. That is, the low noise and energy saving air vacuum cleaner adjusted and controlled according to load of the present invention may operate by comparing the detection amperage of the motor load amperage feedback detector 1041 and the setting of the amperage control device so to input the rated voltage of normal status when the air vacuum cleaner is in normal work status; and the increased amperage exceeds the setting due to that the air vacuum cleaner is in off-load status as the cleaning tool clears away from its work area or the cleaning tool is blocked due to excessive packing against the work area, the electric controlled unit 103 is operated to reduce electric energy transmitted or cut off the power supplied to the air pump drive motor 102 of the air vacuum cleaner for lowering noise level and saving energy.

The electric controlled unit 103 may provide the setup time difference when adapted with a deferred response function to set the response time of the electric controlled unit 103 for the duration of the receiving of feedback signal until the execution of the control of the power supplied to the air pump drive motor 102 of the air vacuum cleaner. The deferred response function relates to an optional function may be provided or not.

To sum up, a low noise and energy saving air vacuum cleaner that is capable of adjusting and controlling electric energy of the present invention achieves reduced noise level and energy saving purposes by reducing the power transported to the air pump driver motor of the air vacuum cleaner when it is in a off-load status and its cleaning tool clears away from its work area or the cleaning tool is blocked due to excessive packing against the work area by providing an active control unit, a passive control unit and a feedback detection unit at where between the input source and the air pump drive motor of the air vacuum cleaner.

## Claims

1. A low noise and energy saving air vacuum cleaner that is capable of adjusting and controlling electric energy of the present invention may rely upon AC city power, or DC power, or a source unit of rechargeable batter for its input source. The present invention while being provided with the power cord, rechargeable battery source unit, operation switch, and fluid pump for vacuum cleaning, dust collection bag and other mechanism, casing and associate units and equipment related to the vacuuming operation is adapted with an electric controlled unit corresponding to the operation status of the air vacuum cleaner; the fashions of interacting control between the electric controlled unit and the source end include:
(1) Active electric controlled unit: an electric controlled unit is comprised of having an impedance unit is connected in series with a power source and an air pump drive motor for executing active control of the power transported to the air pump drive motor of the air vacuum cleaner; and
(2) Passive electric controlled unit: an electric controlled unit is disposed between the input source end and the air pump drive motor of the air vacuum cleaner to function as a passive electric controlled unit; and feedback detector is provided to control the electric controlled unit to execute passive control of the power transported to the air pump drive motor of the air vacuum cleaner; the air pump drive motor of the air vacuum cleaner is controlled by the electric controlled unit in the following fashions:
- Controls the current transported to the air pump drive motor to maintain as a rated or limit current output; or
- Controls the voltage transported to the air pump drive motor of the air vacuum cleaner; or
- Controls the source to supply or cut off the power to the air pump drive motor of the air vacuum cleaner; or
- Controls to switch the tapping of the magnetic filed winding of the series excitation ring header type of motor if the air pump drive motor of the air vacuum cleaner relates to a series excitation ring header type of motor so to change the rpm of the air pump drive motor of the air vacuum cleaner;
One or a plurality of the following functions may be selected for the low noise and energy saving air vacuum cleaner that is capable of adjusting and controlling electric energy:
(1) Adjust and control the inputted electric energy to be reduced or cut off when the cleaning tool of the vacuum leaner is in off load status or blocked due to excessive packing against the work area;
(2) Adjust and control the inputted electric energy to be reduced or cut off when the cleaning tool of the vacuum leaner is in off load status; and/or
(3) Adjust and control the inputted electric energy to be reduced or cut off when the cleaning tool of the vacuum leaner is blocked due to excessive packing against the work area;
The electric controlled unit may provide the setup time difference when adapted with a deferred response function to set the response time of the electric controlled unit for the duration of the receiving of feedback signal until the execution of the control of the power supplied to the air pump drive motor of the air vacuum cleaner. The deferred response function relates to an optional function may be provided or not;
A feedback detection unit may be further provided to the low noise and energy saving air vacuum cleaner that is capable of adjusting and controlling electric energy of the present invention to detect the operation status of the air vacuum cleaner, thus to control the electric controlled unit functioning as a passive control unit for further control of the operation of the air pump drive motor of the air vacuum cleaner; the preferred embodiment is essentially comprised of :
- The air pump drive motor 102: a series excitation motor, shunt excitation motor, compound excitation motor, or ring header type of brush motors including shunt excitation motor with magnetic field of permanent magnet driven by AC or DC source; or brushless motor of permanent magnet, magnetic resistance motor, cage rotor induction motor, slip ring induction motor that is capable of synchronous or asynchronous operation may be selected to drive the air pump of the air vacuum cleaner; and
- An electric controlled unit 103: comprised of a electromechanical device or solid state electronic device of the prior art to be disposed at where between the source and the air pump drive motor 102 of the air vacuum cleaner for subject to the control by a feedback detection unit 104; accordingly, when the air vacuum cleaner is in its normal work status, the normal rated voltage is inputted; and during the off-load status when the cleaning tool of the air vacuum cleaner clears away from its work area, or the cleaning tool is blocked due to excessive packing against the work area, the power supply to the air pump drive motor 102 is either reduced or cut off for noise reduction and power saving purposes; the input end of the electric controlled unit 103 may be related to AC or DC power from city power socket or a DC source from a rechargeable type of source unit as required; and the output end of the electric controlled unit 103 may be related to AC or DC power to control its output voltage and amperage subject to the specification of the air pump drive motor 102 adapted, and further to control its voltage, amperage and frequency if an AC or DC brushless motor is elected for the air pump driver motor 102 of the air vacuum; and
- A feedback detection unit 104: comprised of a motor load amperage detector 1041, or a motor speed detector 1042, or a fluid pressure detector 1043, or a fluid speed detector 1044 to produce detection signals related to the operation status of the air vacuum cleaner, the detection signal may be related to ON-OFF switch signal, analog signal, digital signal or encoding signal to be transmitted to the electric controlled unit 103 where the signal is compared with the settings of the electric controlled unit 103; when the air vacuum is in its normal work status, or the cleaning tool is blocked due to excessive packing against the work area, a normal rated voltage is inputted into the air pump drive motor 102 of the air vacuum cleaner; and when the air vacuum cleaner is in off-load status as the cleaning tool clears away from its work area so to reduce the power supplied to the air pump drive motor 102 of the air vacuum cleaner, thus to reduce the speed of the air pump drive motor 102 of the air vacuum cleaner for achieving reduced noise level and power-saving purposes;
The electric controlled unit 103 may provide the setup time difference when adapted with a deferred response function to set the response time of the electric controlled unit 103 for the duration of the receiving of feedback signal until the execution of the control of the power supplied to the air pump drive motor 102 of the air vacuum cleaner; the deferred response function relates to an optional function may be provided or not.

2. The low noise and energy saving air vacuum cleaner that is capable of adjusting and controlling electric energy depending on the load as claimed in Claim 1, wherein the feedback detection unit 104 is comprised of the motor speed detector 1042 and motor speed feedback signals are produced for the control of the power transported from the electric controlled unit 103 to the air pump drive motor 102 of the air vacuum cleaner, when the air vacuum is in its normal work status, a normal rated voltage is inputted; and when the air vacuum cleaner is in off-load status as the cleaning tool clears away from its work area or the cleaning tool is blocked due to excessive packing against the work area so to reduce or cut off the power supplied to the air pump drive motor 102 of the air vacuum cleaner, thus to reduce the noise level and save power.

3. The low noise and energy saving air vacuum cleaner that is capable of adjusting and controlling electric energy depending on the load as claimed in Claim 1, wherein the detection signals from a motor rpm detector are operated to switch the variable windings of the air pump drive motor of the air vacuum cleaner, thus the air pump drive motor 102 may be comprised of a series excitation or compound excitation ring header type of motor; if the air pump drive motor 102 of the air vacuum cleaner relates to a series excitation ring header type of motor, and is adapted with the feedback detection unit 104 comprised of the motor speed detector 1042; the operation control methods include: (1) the motor speed detector 1042 functioning as a switch to directly switch the control of the tapping of the series excitation magnetic filed winding from the air pump drive series excitation ring header type of motor of the air vacuum cleaner or (2) by having the motor speed detector 1042 to produce detection signals to control the operation of the electric controlled unit 103 before switching the control of the tapping of the series excitation magnetic filed winding from the air pump drive series excitation ring header type of motor of the air vacuum cleaner; so that when the air vacuum cleaner is at its normal work status, the power is supplied to a higher speed tapping 411 of the winding of magnetic field of the air pump drive series excitation ring header type of motor of the air vacuum cleaner; and when the air vacuum cleaner is in its off-load status with its cleaning tool clears away from the work area, or the cleaning tool is blocked due to excessive packing against the work area, the power is supplied to a lower speed tapping 412 of the winding of magnetic field of the air pump drive series excitation ring header type of motor of the air vacuum cleaner so to reduce the power transported to the air pump series excitation ring head type of motor 1021 or the power transported thereto is cut off; if the air pump drive motor 102 is related to a compound ring header type of motor adapted with a parallel excitation winding 1022, the motor speed detector 1042 functions as a switch, or having the motor speed detector 1042 to produce detection signals to control the operation of the electric controlled unit 103 to further adjust and control the excitation intensity of the series excitation magnetic field or the parallel excitation magnetic field winding so to reduce electric energy transmitted or cut off the power supplied to the air pump drive motor 102 of the air vacuum cleaner;
The electric controlled unit 103 may provide the setup time difference when adapted with a deferred response function to set the response time of the electric controlled unit 103 for the duration of the receiving of feedback signal until the execution of the control of the power supplied to the air pump drive motor 102 of the air vacuum cleaner; the deferred response function relates to an optional function may be provided or not.

4. The low noise and energy saving air vacuum cleaner that is capable of adjusting and controlling electric energy depending on the load as claimed in Claim 1, wherein the feedback detection unit 104 is comprised of a fluid pressure detector 1043 disposed at the inlet or outlet of the fluid to produce feedback signals for the control of power transported to the air pump drive motor 102 of the air vacuum cleaner from the electric controlled unit 103; when the air vacuum cleaner is at its normal work status, normal rated voltage is inputted; and when the air vacuum cleaner is in its off-load status with the cleaning tool clears away from the work area, or the cleaning tool is blocked due to excessive packing against the work area, the power supplied to the air pump driver motor 102 of the air vacuum cleaner is reduced or cut off for achieving the purposes of reduced noise level and energy saving.

5. The low noise and energy saving air vacuum cleaner that is capable of adjusting and controlling electric energy depending on the load as claimed in Claim 1, wherein the detection signals from a fluid pressure detector of air inlet or air outlet are operated to switch an air pump drive ring header type motor variable windings of the air vacuum cleaner, thus the air pump drive motor 102 may be comprised of a series excitation or compound excitation ring header type of motor; if the air pump drive motor 102 of the air vacuum cleaner relates to a series excitation ring header type of motor and is adapted with the feedback detection unit 104 comprised of the fluid pressure detector 1043 at the inlet or outlet of the fluid; the operation control methods include: (1) the fluid pressure detector 1043 functioning as a switch to directly switch the control of the tapping of the series excitation magnetic filed winding from the air pump drive series excitation ring header type of motor of the air vacuum cleaner or (2) by having the fluid pressure detector 1043 to produce detection signals to control the operation of the electric controlled unit 103 before switching the control of the tapping of the series excitation magnetic filed winding from the air pump drive series excitation ring header type of motor of the air vacuum cleaner; so that when the air vacuum cleaner is at its normal work status, the power is supplied to a higher speed tapping 411 of the winding of magnetic field of the air pump drive series excitation ring header type of motor of the air vacuum cleaner; and when the air vacuum cleaner is in its off-load status with its cleaning tool clears away from the work area, or the cleaning tool is blocked due to excessive packing against the work area, the power is supplied to a lower speed tapping 412 of the winding of magnetic field of the air pump drive series excitation ring header type of motor of the air vacuum cleaner so to reduce the power transported to the air pump series excitation ring head type of motor 1021 or the power transported thereto is cut off; if the air pump drive motor 102 is related to a compound ring header type of motor adapted with a parallel excitation winding 1022, the fluid pressure detector 1043 functions as a switch, or having the fluid pressure detector 1043 to produce detection signals to control the operation of the electric controlled unit 103 to further adjust and control the excitation intensity of the series excitation magnetic field or the parallel excitation magnetic field winding so to reduce electric energy transmitted or cut off the power supplied to the air pump drive motor 102 of the air vacuum cleaner;
The electric controlled unit 103 may provide the setup time difference when adapted with a deferred response function to set the response time of the electric controlled unit 103 for the duration of the receiving of feedback signal until the execution of the control of the power supplied to the air pump drive motor 102 of the air vacuum cleaner; the deferred response function relates to an optional function may be provided or not.

6. The low noise and energy saving air vacuum cleaner that is capable of adjusting and controlling electric energy depending on the load as claimed in Claim 1, wherein the feedback detection unit 104 is comprised of the fluid speed detector 1044 to produce feedback signals for the control of the power transported to the air pump drive motor 102 of the air vacuum cleaner from the electric controlled unit 103; when the air vacuum is in its normal work status, a normal rated voltage is inputted; and when the air vacuum cleaner is in off-load status as the cleaning tool clears away from its work area and the cleaning tool is blocked due to excessive packing against the work area so to reduce or cut off the power supplied to the air pump drive motor 102 of the air vacuum cleaner, thus to reduce the noise level and save power.

7. The low noise and energy saving air vacuum cleaner that is capable of adjusting and controlling electric energy depending on the load as claimed in Claim 1, wherein the detection signals from a fluid speed detector of air inlet or air outlet are operated to switch an air pump drive ring header type motor variable windings of the air vacuum cleaner, thus the air pump drive motor 102 may be comprised of a series excitation or compound excitation ring header type of motor; if the air pump drive motor 102 of the air vacuum cleaner relates to a series excitation ring header type of motor and is adapted with the feedback detection unit 104 comprised of the fluid pressure detector 1043 at the inlet or outlet of the fluid; the operation control methods include: (1) the fluid speed detector 1044 functioning as a switch to directly switch the control of the tapping of the series excitation magnetic filed winding from the air pump drive series excitation ring header type of motor of the air vacuum cleaner or (2) by having the fluid speed detector 1044 to produce detection signals to control the operation of the electric controlled unit 103 before switching the control of the tapping of the series excitation magnetic filed winding from the air pump drive series excitation ring header type of motor of the air vacuum cleaner; so that when the air vacuum cleaner is at its normal work status, the power is supplied to a higher speed tapping 411 of the winding of magnetic field of the air pump drive series excitation ring header type of motor of the air vacuum cleaner; and when the air vacuum cleaner is in its off-load status with its cleaning tool clears away from the work area, or the cleaning tool is blocked due to excessive packing against the work area, the power is supplied to a lower speed tapping 412 of the winding of magnetic field of the air pump drive series excitation ring header type of motor of the air vacuum cleaner so to reduce the power transported to the air pump series excitation ring head type of motor 1021 or the power transported thereto is cut off; if the air pump drive motor 102 is related to a compound ring header type of motor adapted with a parallel excitation winding 1022, the fluid speed detector 1044 functions as a switch, or having the fluid speed detector 1044 to produce detection signals to control the operation of the electric controlled unit 103 to further adjust and control the excitation intensity of the series excitation magnetic field or the parallel excitation magnetic field winding so to reduce electric energy transmitted or cut off the power supplied to the air pump drive motor 102 of the air vacuum cleaner;
The electric controlled unit 103 may provide the setup time difference when adapted with a deferred response function to set the response time of the electric controlled unit 103 for the duration of the receiving of feedback signal until the execution of the control of the power supplied to the air pump drive motor 102 of the air vacuum cleaner; the deferred response function relates to an optional function may be provided or not.

8. The low noise and energy saving air vacuum cleaner that is capable of adjusting and controlling electric energy depending on the load as claimed in Claim 1, wherein the work status detection switch unit e.g., a slide dynamo-electric switch 1045 or a non-slide approximate switch 1046 is further disposed at where between the fluid suction inlet of the air vacuum cleaner and its work area, to control the voltage transported to the air pump driver motor 102 from the electric controlled unit 103; when the air vacuum cleaner is in its normal work status, the normal rated voltage is inputted to drive the air pump drive motor 102 of the air vacuum cleaner; and when the air vacuum cleaner is in its off-load status with the cleaning tool clears away from the work area, the power transported to the air pump drive motor 102 of the air vacuum cleaner is reduced or cut off for reducing noise level and for energy-saving purposes; or the direct switch is executed by the work status detection switch to lower the speed of the air pump drive motor 102 of the air vacuum cleaner, or to cut off the power transported to the air pump drive motor 102 of the air vacuum cleaner; or the switch is executed by the electric controlled unit 103 to lower the speed of the air pump drive motor 102 of the air vacuum cleaner, or to cut off the power transported to the air pump drive motor 102 of the air vacuum cleaner;
The electric controlled unit 103 may provide the setup time difference when adapted with a deferred response function to set the response time of the electric controlled unit 103 for the duration of the receiving of feedback signal until the execution of the control of the power supplied to the air pump drive motor 102 of the air vacuum cleaner; the deferred response function relates to an optional function may be provided or not.

9. The low noise and energy saving air vacuum cleaner that is capable of adjusting and controlling electric energy depending on the load as claimed in Claim 8, wherein the work status detection switch is provided to control the operation of the air pump drive motor of the air vacuum cleaner, in order to having a slide dynamo-electric switch 1045 at where between the fluid suction inlet of the air vacuum cleaner and its work area; when the air vacuum is in its normal work status, a normal rated voltage is inputted; and when the air vacuum cleaner is in off-load status as the cleaning tool clears away from its work area and the cleaning tool is blocked due to excessive packing against the work area so to reduce or cut off the power supplied to the air pump drive motor 102 of the air vacuum cleaner, thus to reduce the noise level and save power.

10. The low noise and energy saving air vacuum cleaner that is capable of adjusting and controlling electric energy depending on the load as claimed in Claim 8, wherein the slide dynamo-electric switch is provided to switch an air pump drive ring header type more variable windings of the air vacuum cleaner at where between the fluid suction inlet of the air vacuum cleaner and its work area, thus the air pump drive motor 102 may be comprised of a series excitation or compound excitation ring header type of motor; if the air pump drive motor 102 of the air vacuum cleaner relates to a series excitation ring header type of motor and is adapted with the feedback detection unit 104 comprised of the slide dynamo-electric switch 1045 at the inlet or outlet of the fluid; the operation control methods include: (1) the slide dynamo-electric switch 1045 functioning as a switch to directly switch the control of the tapping of the series excitation magnetic filed winding from the air pump drive series excitation ring header type of motor of the air vacuum cleaner or (2) by having the slide dynamo-electric switch 1045 to produce detection signals to control the operation of the electric controlled unit 103 before switching the control of the tapping of the series excitation magnetic filed winding from the air pump drive series excitation ring header type of motor of the air vacuum cleaner; so that when the air vacuum cleaner is at its normal work status, the power is supplied to a higher speed tapping 411 of the winding of magnetic field of the air pump drive series excitation ring header type of motor of the air vacuum cleaner; and when the air vacuum cleaner is in its off-load status with its cleaning tool clears away from the work area, or the cleaning tool is blocked due to excessive packing against the work area, the power is supplied to a lower speed tapping 412 of the winding of magnetic field of the air pump drive series excitation ring header type of motor of the air vacuum cleaner so to reduce the power transported to the air pump series excitation ring head type of motor 1021 or the power transported thereto is cut off; if the air pump drive motor 102 is related to a compound ring header type of motor adapted with a parallel excitation winding 1022, the slide dynamo-electric switch 1045 functions as a switch, or having the slide dynamo-electric switch 1045 to produce detection signals to control the operation of the electric controlled unit 103 to further adjust and control the excitation intensity of the series excitation magnetic field or the parallel excitation magnetic field winding so to reduce electric energy transmitted or cut off the power supplied to the air pump drive motor 102 of the air vacuum cleaner;
The electric controlled unit 103 may provide the setup time difference when adapted with a deferred response function to set the response time of the electric controlled unit 103 for the duration of the receiving of feedback signal until the execution of the control of the power supplied to the air pump drive motor 102 of the air vacuum cleaner; the deferred response function relates to an optional function may be provided or not.

11. The low noise and energy saving air vacuum cleaner that is capable of adjusting and controlling electric energy depending on the load as claimed in Claim 8, wherein the work status detection switch is provided to control the operation of the air pump drive motor of the air vacuum cleaner, in order to having an optical, static, or ultrasonic non-slide approximately detection switch 1046 at where between the fluid suction inlet of the air vacuum cleaner and its work area; when the air vacuum is in its normal work status, a normal rated voltage is inputted; and when the air vacuum cleaner is in off-load status as the cleaning tool clears away from its work area and the cleaning tool is blocked due to excessive packing against the work area so to reduce or cut off the power supplied to the air pump drive motor 102 of the air vacuum cleaner, thus to reduce the noise level and save power.

12. The low noise and energy saving air vacuum cleaner that is capable of adjusting and controlling electric energy depending on the load as claimed in Claim 8, wherein the non-slide approximate switch 1046 is provided to switch an air pump drive ring header type more variable windings of the air vacuum cleaner, thus the air pump drive motor 102 may be comprised of a series excitation or compound excitation ring header type of motor; if the air pump drive motor 102 of the air vacuum cleaner relates to a series excitation ring header type of motor and the air pump drive series excitation ring header type of motor of the air vacuum cleaner is adapted with the feedback detection unit 104 comprised of the non-slide approximate switch at the inlet or outlet of the fluid; the operation control methods include:
(1) the non-slide approximate switch 1046 functioning as a switch to directly switch the control of the tapping of the series excitation magnetic filed winding from the air pump drive series excitation ring header type of motor of the air vacuum cleaner or (2) by having the non-slide approximate switch 1046 to produce detection signals to control the operation of the electric controlled unit 103 before switching the control of the tapping of the series excitation magnetic filed winding from the air pump drive series excitation ring header type of motor of the air vacuum cleaner; so that when the air vacuum cleaner is at its normal work status, the power is supplied to a higher speed tapping 411 of the winding of magnetic field of the air pump drive series excitation ring header type of motor of the air vacuum cleaner; and when the air vacuum cleaner is in its off-load status with its cleaning tool clears away from the work area, or the cleaning tool is blocked due to excessive packing against the work area, the power is supplied to a lower speed tapping 412 of the winding of magnetic field of the air pump drive series excitation ring header type of motor of the air vacuum cleaner so to reduce the power transported to the air pump series excitation ring head type of motor 1021 or the power transported thereto is cut off; if the air pump drive motor 102 is related to a compound ring header type of motor adapted with a parallel excitation winding 1022, the non-slide approximate switch 1046 functions as a switch, or having the non-slide approximate switch 1046 to produce detection signals to control the operation of the electric controlled unit 103 to further adjust and control the excitation intensity of the series excitation magnetic field or the parallel excitation magnetic field winding so to reduce electric energy transmitted or cut off the power supplied to the air pump drive motor 102 of the air vacuum cleaner;
The electric controlled unit 103 may provide the setup time difference when adapted with a deferred response function to set the response time of the electric controlled unit 103 for the duration of the receiving of feedback signal until the execution of the control of the power supplied to the air pump drive motor 102 of the air vacuum cleaner; the deferred response function relates to an optional function may be provided or not.

13. The low noise and energy saving air vacuum cleaner that is capable of adjusting and controlling electric energy depending on the load as claimed in Claim 1, wherein the impedance unit connected in series with a power source and an air pump drive motor is provided to control the air pump drive motor, is essentially comprised of:
- An air pump drive motor 102 of the air vacuum cleaner:
depending on the source available, an AC or DC series excitation motor, shunt excitation motor, compound excitation motor, or ring header type of brush motors including shunt excitation motor with magnetic field of permanent magnet; or brushless motor of permanent magnet, magnetic resistance motor, cage rotor induction motor, slip ring induction motor that is capable of synchronous or asynchronous operation to drive the air pump of the air vacuum cleaner; and
- An impedance unit 101: connected in series with the source and the air pump drive motor 102 of the air vacuum cleaner, essentially comprised of a capacitor impedance unit for executing active control; alternatively, the impedance unit 101 for active control unit may be comprised of a resistance device or a positive coefficient resistance device (PTC), or inductive device; or the impedance unit 101 is comprised of any one or multiple of the same or different devices described herein connected in series, parallel, or series-parallel; the input end of the impedance unit 101 may be related to AC or DC power from city power socket, or to a DC power supplied from a rechargeable battery type of source installation as required so to cause the both end voltage of the impedance unit 101 to relatively change with the load amperage to actively drop the end voltage of the air pump drive motor of the air vacuum motor for reducing the electric power while the cleaning tool of the air vacuum cleaner clears away from its work area to indicate off-load status or the cleaning tool is blocked due to excessive packing against the work area.

14. The low noise and energy saving air vacuum cleaner that is capable of adjusting and controlling electric energy depending on the load as claimed in Claim 1, wherein the feedback detection unit 104 is comprised of the motor load amperage feedback detector 1041 and the load amperage feedback signals are provided for the control of the power transported from the electric controlled unit 103 to the air pump drive motor 102 of the air vacuum cleaner; when the air vacuum is in its normal work status, a normal rated voltage is inputted; and when the air vacuum cleaner is in off-load status as the cleaning tool clears away from its work area or the cleaning tool is blocked due to excessive packing against the work area, the electric controlled unit 103 is operated to reduce or cut off the power supplied to the air pump drive motor 102 of the air vacuum cleaner, thus to reduce the noise level and save power, that is, the low noise and energy saving air vacuum cleaner adjusted and controlled according to load of the present invention may operate by comparing the detection amperage of the motor load amperage feedback detector 1041 and the setting of the amperage control device so to input the rated voltage of normal status when the air vacuum cleaner is in normal work status; and the increased amperage exceeds the setting due to that the air vacuum cleaner is in off-load status as the cleaning tool clears away from its work area or the cleaning tool is blocked due to excessive packing against the work area, the electric controlled unit 103 is operated to reduce electric energy transmitted or cut off the power supplied to the air pump drive motor 102 of the air vacuum cleaner for lowering noise level and saving energy;
The electric controlled unit 103 may provide the setup time difference when adapted with a deferred response function to set the response time of the electric controlled unit 103 for the duration of the receiving of feedback signal until the execution of the control of the power supplied to the air pump drive motor 102 of the air vacuum cleaner; the deferred response function relates to an optional function may be provided or not.

15. A vacuum cleaner comprising a drive motor for supplying sub-atmospheric air pressure to a cleaning tool, a control unit for reducing or cutting-off electric power supplied to the drive motor when the cleaning tool is in an off-load status or is blocked, and a detector for detecting when the cleaning tool is in an off-load status or is blocked.
